# EUROPÄISCHE PATENTSCHRIFT

(11) **EP 1 524 835 B1**
(45) Veröffentlichungstag und Bekanntmachung des Hinweises auf die Patenterteilung: **06.05.2015**
(21) Anmeldenummer: 04020372.1
(22) Anmeldetag: 27.08.2004
(51) Int. Cl.: H04M 3/38, H04M 1/665, H04M 3/436

(54) **Verfahren zur Berechtigungsprüfung beim Aufbau und/oder Weitervermittlung einer Telekommunikationsverbindung**
Method to check the authorisation at setup and/or transfer of a telephone call
Procède pour vérifier l'autorisation pour l'établissement et/ou le transfert d'un appel téléphonique

(30) Priorität: 24.09.2003 DE 10344483
(43) Veröffentlichungstag der Anmeldung: 20.04.2005
(73) Patentinhaber: Vodafone Holding GmbH, 40213 Düsseldorf (DE)
(72) Erfinder: Gerlach, Heiko, 40211 Düsseldorf (DE)
(74) Vertreter: Ring & Weisbrodt

(56) Entgegenhaltungen:
- EP-A- 0 923 219
- US-A1- 2003 005 284
- PARK CH-S: "ON CERTIFICATE-BASED SECURITY PROTOCOLS FOR WIRELESS MOBILE COMMUNICATION SYSTEMS" IEEE NETWORK, IEEE INC. NEW YORK, US, Bd. 11, Nr. 5, September 1997 (1997-09), Seiten 50-55, XP000699941 ISSN: 0890-8044

## Beschreibung

### Technisches Gebiet

Die Erfindung betrifft ein Verfahren zur Berechtigungsprüfung beim Aufbau und/oder Weitervermittlung einer Teilnehmerverbindung, welche durch einen Teilnehmer mit einem Kommunikationsgerät in einem Mobilfunk- oder Festnetz angefordert werden kann, wobei eine Zielrufnummer in das Kommunikationsgerät eingegeben wird, zu der der Ruf weitervermittelt wird und ein identifizierender Berechtigungscode, der aus einer Prüfsumme gebildet wird, der Zielrufnummer angehängt wird.

### Stand der Technik

Über das Festnetz und mit dem Mobilfunknetz lässt sich mit einem geeigneten Kommunikationsendgerät, beispielsweise Festnetztelefon oder Mobilfunktelefon, der Zugang zu verschiedenen Applikationen und/oder Dienstleistungen anwählen. Bei den Applikationen und Dienstleitungen kann es sich um eine einfache Rufumleitung, aber auch um einen Service eines Dienstleisters, z.B. Anbieter von Wettervorhersagen, von Börsenkursangaben oder von Staumeldungen, handeln. Die Weitervermittlung der Gespräche erfolgt üblicherweise über den Mobilfunk- oder Festnetzanbieter.

Um sicherzustellen, dass nur befugte oder ausgewählte Teilnehmer eine Applikation oder Dienstleistung nutzen können, ist derzeit für jede dieser Applikationen oder Dienstleistungen eine Datenbank, die sogenannte "Whitelist", erforderlich.

In jeder dieser Datenbanken ist jeweils die Rufnummer eines Teilnehmers enthalten, deren Service er nutzen darf. Die Pflege dieser Datenbanken erfordert einen hohen Administrations- und Verwaltungsaufwand. Wegen dieses hohen Aufwands, der nicht unerhebliche Kosten für den Netzbetreiber mit sich bringt, wird derzeit oft auf die Pflege der Datenbanken verzichtet. Damit ist es für die Teilnehmer besonders einfach, Dienste und Applikationen zu nutzen, obwohl sie nicht berechtigt waren. Hier reicht es oft aus, wenn lediglich die entsprechenden Rufnummern untereinander ausgetaucht werden.

Die EP 0 923 219 A1 beschreibt ein Verfahren zur unterschiedlichen Behandlung von Anrufen. Eine vorher vereinbarte Zahlenkombination zwischen zwei Teilnehmern wird bei einem Anruf durch Nachwahl eingegeben. Die Zahlenkombination wird in einer Behandlungseinheit anhand einer Entscheidungsliste ausgewertet. Je nach erkannter Berechtigung wird von der Behandlungseinheit der Anruf entweder auf den Teilnehmer durchgeschaltet oder eine Weiterleitung des Anrufs, beispielsweise auf einen Anrufbeantworter, veranlasst.

Die US 2003 000 5284 A1 offenbart ein Verfahren zur sicheren Datenübertragung von einem Sender an einen Empfänger. Die zu übermittelnden Daten sind mit einem Authentifizierungsprotokoll versehen, das vom Empfänger identifiziert werden kann. Nur bei einer erfolgreichen Authentifizierung, werden die Daten übertragen. Authentifizierungsprotokolle sind beispielsweise die Hash-Funktionen oder das MC-Protokoll (message authentification code).

Die Druckschrift XP 000699941 "On Certificate-Based Security Protocol for Wireless Mobile Communication Systems" beschäftigt sich mit verschiedenen Sicherheitsprotokollen im Mobilfunknetz. Beim Datenaustausch zwischen Mobilfunkendgerät und Mobilfunknetz (im Heimatnetzwerk bzw. im besuchten Mobilfunknetzwerk) oder zwischen zwei Mobilfunkendgeräten, werden Verschlüsselungssysteme, wie etwa das RSA-Verschlüsselungssystem (Rivest, Shamir and Adleman) oder das Diffie-Hellmann-System zur Authentifizierung herangezogen. Die Verschlüsselungssysteme können auf einer Smartkarte des Mobilfunkendgerätes implementiert sein.

### Offenbarung der Erfindung

Aufgabe der Erfindung ist es daher, ein Verfahren zu schaffen, das die genannten Nachteile des Standes der Technik beseitigt und es insbesondere dem Teilnehmer erschwert, unberechtigt Applikationen und Dienstleistungen in Anspruch zu nehmen.

Erfindungsgemäß wird die Aufgabe unter anderem dadurch gelöst, dass bei einem Verfahren zur Berechtigungsprüfung beim Aufbau und/oder Weitervermittlung einer Teilnehmerverbindung der eingangs genannten Art, ein identifizierender Berechtigungscode der Zielrufnummer angehängt wird.

Mit dem Berechtigungscode, der der Zielrufnummer angehängt wird, wird dem Teilnehmer quasi ein Schlüssel mitgegeben, mit dem unmittelbar festgestellt werden kann, ob er für die Nutzung einer bestimmten Weitervermittlung oder Dienstleistung berechtigt ist. Die Erfindung liefert somit eine Lösung, bei der eine Datenbank, die verwaltet und gepflegt werden muss, nicht mehr erforderlich ist. So vermeidet das erfindungsgemäße Verfahren, dass nun nicht mehr die komplette Datenbank ("Whitelist") für jede Berechtigung gespeichert werden muss. Vielmehr reicht es aus, Mittel oder eine Einrichtung zum Erkennen eines zulässigen Berechtigungscodes seitens des Netzbetreibers vorzusehen. Die umfangreichen Datenbanken für einen Abgleich bei einer Berechtigungsanfrage müssen daher nicht mehr gespeichert werden.

In dem erfindungsgemäßen Verfahren zur Berechtigungsprüfung beim Aufbau und/oder Weitervermittlung einer Teilnehmerverbindung wird der identifizierende Berechtigungscode aus einer geeigneten Prüfsumme gebildet. Die Prüfsummenbildung ist üblicherweise ein Verfahren zur Fehlererkennung, das insbesondere in zahlreichen Netzwerkprotokollen implementiert ist. Dem Verfahren nach wird ein Teil der zu übertragenen Informationen mit einem komplizierten mathematischen Algorithmus versehen. Je nach Prüfsummen-Verfahren wird z.B. die Blockprüfsumme durch eine bestimmte Zahl, das so genannte Generatorpolynom, geteilt, und der nichtteilbare Restbetrag wird invertiert der zu übertragenden Blockprüfsumme angefügt. Das Ergebnis ist eine einzigartige Prüfsumme, mit der geprüft wird, ob der Teilnehmer berechtigt ist. Die Prüfsummenzahl wird am Ende der Zielrufnummer mit übertragen. Der Netzwerkbetreiber des Mobilfunk- oder Festnetzes nutzt den gleichen Algorithmus, errechnet die Prüfsumme und vergleicht die Zahl mit der übertragenen Prüfsumme. Sind die Zahlen identisch, ist der Teilnehmer berechtigt, im anderen Fall ist er unberechtigt und wird z.B. zurückgewiesen. Erfindungsgemäß wird die Prüfsumme aus Teilen der Rufnummer (MSISDN) oder der vollständigen Rufnummer (MSISDN) des Teilnehmers gebildet und der Zielrufnummer angehängt.

Eine weitere vorteilhafte Ausgestaltung des erfindungsgemäßen Verfahrens ergibt sich dadurch, dass die Berechnung der Prüfsumme mit einem Hash- und/oder Checksummenalgorithmus erfolgt. Hash- und/oder Checksummenalgorithmen haben sich bereits vielfältig bei vielen Sicherungseinrichtungen bewährt. Diese Maßnahme lässt sich somit einfach, d.h. ohne großen Aufwand, auch bei dem erfindungsgemäßen Verfahren realisieren. Ein Hash-Algorithmus generiert aus einer beliebigen Datei einen kurzen Extrakt, und zwar derart, dass aus dem Extrakt die ursprüngliche Datei nicht wieder rekonstruierbar ist. Zudem ist es unmöglich, eine andere Datei verschiedenen Inhalts zu erzeugen, die denselben "Hash-Wert" liefert. Dieses Verfahren wird z.B. beim digitalen Unterschreiben von E-Mails angewendet.

Erfindungsgemäß werden nur für solche Teilnehmerverbindungen ein Aufbau- bzw. eine Weitervermittlung durch das Mobilfunk- oder Festnetz durchgeführt, die einen entsprechenden gültigen identifizierenden Berechtigungscode aufweisen.

Vorteilhafterweise werden auch Teilnehmerverbindungen nur von denjenigen Teilnehmern zu Dienstleistungsapplikationen weitergeleitet, die über einen entsprechenden identifizierenden Berechtigungscode verfügen.

Darüber hinaus zeigt es sich als eine besondere Ausgestaltung des erfindungsgemäßen Verfahrens, wenn der Berechtigungscode die Weitervermittlung der durch das Mobilfunk- oder Festnetz nur zu bestimmten Dienstleistungsapplikationen zulässt.

In einer vorteilhaften Ausgestaltung des erfindungsgemäßen Verfahrens wird die Überprüfung des Berechtigungscodes von einer Dienstleistungsapplikation vorgenommen, wobei nur solche Rufe zu den Dienstleistungen weitergeleitet werden, die einen gültigen Berechtigungscode aufweisen. Damit wird die Überprüfung des Berechtigungscodes unabhängig vom jeweiligen Mobilfunknetz.

Eine bevorzugte Variante des erfindungsgemäßen Verfahrens besteht darin, dass eine Dienstleistungsapplikation bei Vorliegen eines gültigen Berechtigungscodes ein bestimmtes vorgebbares Ereignis auslöst. Durch diese Maßnahme kann erreicht werden, dass sich bei der Dienstleistungsapplikation ein Ereignis einstellen lässt, welches bei Vorliegen des Berechtigungscodes aktiviert wird. Ein solches Ereignis besteht vorzugsweise im Versenden einer Textnachricht an eine bestimmte Rufnummer oder in der Vermittlung des Rufs an eine bestimmte Rufnummer.

Weitere Vorteile ergeben sich aus dem Gegenstand der Unteransprüche sowie den Zeichnungen mit den dazugehörigen Beschreibungen.

### Kurze Beschreibung der Zeichnung

- Fig. 1: zeigt in einer Prinzipskizze ein Ausführungsbeispiel des erfindungsgemäßen Verfahrens mit Überprüfung der Prüfsumme durch das Mobilfunknetz.
- Fig. 2: zeigt in einer Prizipskizze ein weiteres Ausführungsbeispiel des erfindungsgemäßen Verfahrens mit Überprüfung der Prüfsumme durch einen Dienstleister mit Weiterleitung.
- Fig. 3: zeigt in einer Prinzipskizze eine Variante des erfindungsgemäßen Verfahrens mit Überprüfung der Prüfsumme durch einen Dienstleister ohne Weiterleitung.

### Bevorzugtes Ausführungsbeispiel

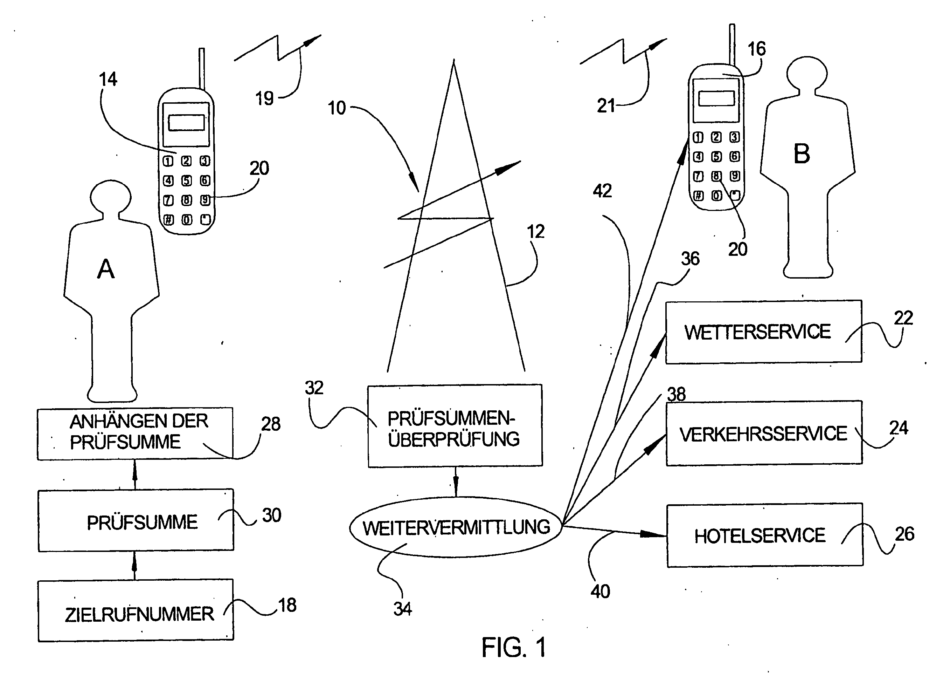

Anhand von Fig. 1 wird ein erstes bevorzugtes Ausführungsbeispiel des erfindungsgemäßen Verfahrens erläutert. Mit 10 wird ein Mobilfunknetz bezeichnet, welches symbolisch durch einen Mast 12 repräsentiert wird. Das Mobilfunknetz 10 arbeitet beispielsweise nach dem GSM- oder UMTS-Standard (GSM= "Global System for Mobile Communication" bzw. UMTS= "Universal Mobile Telecommunication Systems"). In einer üblichen Anwendung kann ein Teilnehmer "A" mit einem Mobilfunkendgerät 14 mit einem Teilnehmer "B", der über ein anderes Mobilfunkendgerät 16 verfügt, kommunizieren, d.h., ein Gespräch führen oder auch Daten/Nachrichten miteinander austauschen. Um einen Teilnehmer B zu erreichen, gibt der Teilnehmer A eine Zielrufnummer 18 über ein Bedienerfeld 20 des Mobilfunkendgeräts 14 ein oder wählt die Zielrufnummer 18 beispielsweise aus einer gespeicherten (Teilnehmer-)Liste. Die Zielrufnummer 18 wird symbolisch als ein Kasten dargestellt. Das Mobilfunknetz 10 vermittelt die gewünschte Teilnehmerverbindung beispielweise an den Teilnehmer B. Dieser kann die gewünschte Teilnehmerverbindung durch geeignete Bestätigung aufbauen oder abweisen. Eine Teilnehmerverbindung zum Mobilfunknetz 10 wird durch Pfeile 19 und 21 dargestellt.

Mittlerweile existieren zahlreiche, insbesondere gebührenpflichtige Dienste, beispielweise Wetterservice 22, der gegen Gebühr eine Wettervorhersage liefert, entsprechend ein Verkehrsservice 24 für Staumeldungen oder ein Hotelservice 26 mit geeigneten Hotelhinweisen für Teilnehmer. Nicht jeder Teilnehmer des Mobilfunk- oder Festnetzes ist in der Lage, die Kosten, die normalerweise über den üblichen Telefontarifen liegen, zu bezahlen

Um bestimmte Personen für bestimmte Netzwerkdienste zu authentifizieren und ihnen damit den Zugang zu diesen Diensten zu ermöglichen, wird der Zielrufnummer 18 automatisch eine Prüfsumme 30 als identifizierender Berechtigungscode angehängt, Kasten 28. Die Prüfsumme 30 wird erfindungsgemäß durch das Mobilfunkendgerät 14 des Teilnehmers A aus der Teilnehmerrufnummer (MSISDN= Mobile Station Integrated Services Digital Network) erzeugt, d.h. errechnet. Durch den Automatismus kann verhindert werden, dass von außen Einfluss auf die Prüfsummenbildung und Anhängen an die Zielrufnummer 18 genommen wird.

Im Fall des Automatismus erzeugt ein geeigneter Algorithmus, beispielsweise ein Hash- und/oder Checksummenalgorithmus, in dem Mobilfunkendgerät 14 eine Prüfsumme 30 aus der Teilnehmerrufnummer (MSISDN) des Teilnehmers A. Das Mobilfunkendgerät 14 weist dazu nicht dargestellte, aber bekannte Rechnermittel auf, welche den Algorithmus zur Prüfsummenberechnung abarbeiten. Vorzugsweise ist der Algorithmus zur Prüfsummenberechnung auf der für den Betrieb des Mobilfunkendgerätes 14 erforderlichen SIM-Karte (= Subscriber Identify Module) gespeichert. Dadurch ist die Erzeugung der Prüfsumme 30 weitestgehend geräteunabhängig und kann in verschiedene Geräte eingesetzt werden. Die Prüfsumme 30 gehört zu der Teilnehmerrufnummer (MSISDN) und identifiziert damit eindeutig den Teilnehmer A.

Die Zielrufnummer 18 mit der automatisch angehängten Prüfsumme wird nun an den Netzwerkbetreiber gesandt, der die gewünschte Teilnehmerverbindung vermitteln soll. Dazu wird die Prüfsumme 30 überprüft, ob der Teilnehmer A für die gewünschte Weitervermittlung überhaupt berechtigt ist. Mit 32 wird die Überprüfung der Prüfsumme 30 bezeichnet. Die Überprüfung 32 der Prüfsumme 30 erfolgt vorliegend in einer nicht dargestellten zentralen Rechnereinheit des Mobilfunknetzes 19. Ein zur Erzeugung der Prüfsumme 30 entsprechender Algorithmus liegt als Gegenstück, wie das Schloss beim Schlüssel-Schloss-Prinzip, auf der Rechnereinheit des Mobilfunknetzes 10 vor. So kann überprüft werden, ob die erzeugte Prüfsumme 30 (Schlüssel) zu der Teilnehmerrufnummer (MSISDN) gehört. Ist die Überprüfung 32 der Prüfsumme 30 erfolgreich, kann der Verbindungswunsch durch das Mobilfunknetz 10 weitervermittelt werden, Ellipse 34.

Je nachdem, welche Zielnummer 18 der Teilnehmer A eingegeben hat, wird er dann zu einem Dienst, z.B. dem Wetterservice 22, dem Verkehrsservice 24 oder dem Hotelservice 26, vermittelt, Pfeile 36, 38, 40. Gegebenenfalls kann der Teilnehmer A auch zu einem Teilnehmer B verbunden werden, Pfeil 42.

Der Netzbetreiber spart auf diese Weise Speicherkapazitäten. Es genügt lediglich der jeweilige Algorithmus für die Überprüfung 32 der Prüfsumme 30. Die umfangreichen Datenbanken ("Whitelists"), die bisher erforderlich waren und entsprechend gepflegt werden mussten, entfallen nun vollständig. Ein Teilnehmer A erweist sich als berechtigt, wenn die Prüfsumme 30 korrekt ist. Die Teilnehmerrufnummer (MSISDN), die Zielrufnummer 18 sowie die Prüfsumme 30 identifizieren den Teilnehmer A für die Berechtigung einer Dienstleistung eindeutig.

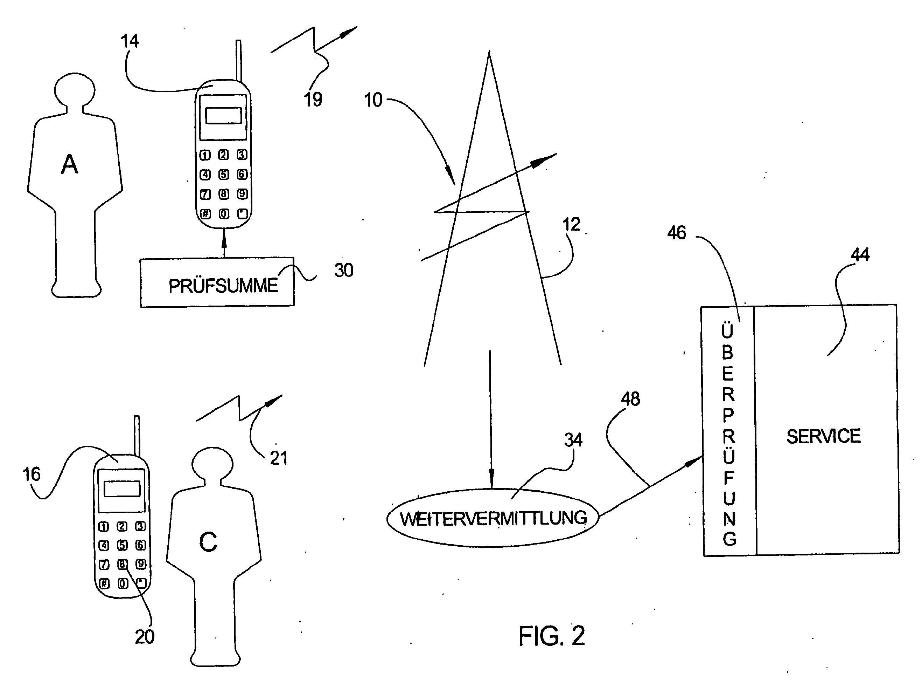

In Fig. 2 wird ein weiteres Ausführungsbeispiel des erfindungsgemäßen Verfahrens dargestellt. Gleiche Bestandteile, wie zu Fig. 1, werden mit sich entsprechenden Bezugszeichen bezeichnet. Der Teilnehmer A leitet sein Mobiltelefon 14 durch Eingabe eines Rufumleitungsziels und angehängter Prüfsumme 30 auf einen Service 44 um.

Im vorliegenden Ausführungsbeispiel der Fig. 2 besteht der Service 44 darin, dass bei Anruf eines dritten Teilnehmers C bei Teilnehmer A dieser auf den Service 44 geleitet wird, wo er sich beispielsweise eine für ihn bestimmte Nachricht abholen kann oder er an einen weiteren Teilnehmer weitergeleitet wird. Der Service 44 kann, falls er entsprechend aktiviert wird, aber auch automatisch eine Textnachricht (SMS) an eine vorgebbare Rufnummer versenden, sobald ein Teilnehmer C bei Teilnehmer A anruft.

Das Mobilfunknetz 10 leitet den Vermittlungswunsch des Teilnehmers C, Pfeil 21, Ellippse 34 an den Service 44 weiter, Pfeil 48.

Der Service 44 überprüft nun die korrekte Bildung der Prüfsumme 30. Der jeweilige Service 44 verfügt dazu über geeignete Prüfmittel 46, welche insbesondere den Algorithmus für die Überprüfung der Prüfsumme 30 aufweisen. Stellt sich heraus, dass die Prüfsumme 30 korrekt ist, kann der Teilnehmer A den Service 44 aktivieren und in Anspruch nehmen.

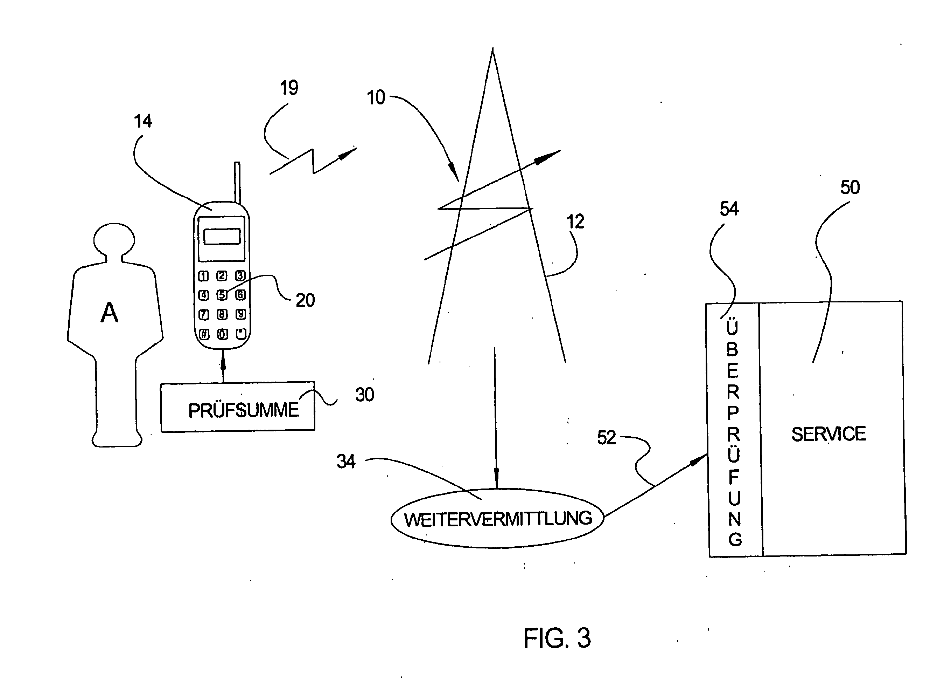

In Fig. 3 wird in einer Prinzipskizze eine Variante des erfindungsgemäßen Verfahrens mit Überprüfung der Prüfsumme 30 durch einen Dienstleister ohne Weiterleitung dargestellt. Gleiche Bestandteile, wie in den vorherigen Figuren, werden mit sich entsprechenden Bezugszeichen bezeichnet. Der Teilnehmer A wählt eine Zielrufnummer 18, um einen Service 50 anzuwählen. Um jedoch den Service 50 in Anspruch nehmen zu können, ist eine Prüfsumme 30 erforderlich. Die Prüfsumme 30 wird der Zielrufnummer 18 angehängt. Das Mobilfunknetz 10 leitet den Vermittlungswunsch des Teilnehmers A, Ellipse 34, an den Service 50 weiter, Pfeil 52.

Der Service 50 überprüft nun die korrekte Bildung der Prüfsumme 30. Der Service 50 verfügt dazu über geeignete Prüfmittel 54, welche insbesondere den Algorithmus für die Überprüfung der Prüfsumme 30 aufweisen. Die Überprüfung erfolgt hierbei auf Basis der Teilnehmerrufnummer (MSISDN) von Teilnehmer A. Stellt sich heraus, dass die Prüfsumme 30 korrekt ist, kann der Teilnehmer A den Service 50 aktivieren und in Anspruch nehmen.

## Patentansprüche

1. Verfahren zur Berechtigungsprüfung beim Aufbau und/oder Weitervermittlung (34) einer Teilnehmerverbindung (19), welche durch einen Teilnehmer (A) mit einem Kommunikationsgerät (14) in einem Mobilfunk- (10) oder Festnetz angefordert werden kann, wobei eine Zielrufnummer (18) in das Kommunikationsgerät (14) eingegeben wird, zu der der Ruf weitervermittelt wird und ein identifizierender Berechtigungscode, der aus einer Prüfsumme (30) gebildet wird, der Zielrufnummer (18) angehängt wird, wobei nur für solche Teilnehmerverbindungen ein Aufbau beziehungsweise eine Weitervermittlung durch das Mobilfunk- oder Festnetz durchgeführt werden, die einen entsprechenden gültigen identifizierenden Berechtigungscode aufweisen, **dadurch gekennzeichnet, dass** die Prüfsumme (30) aus Teilen der Rufnummer (MSISDN) oder der vollständigen Rufnummer (MSISDN) des Teilnehmers (A) gebildet wird und durch das Mobilfunkendgerat des Teilnehmers (A) erzeugt wird.

2. Verfahren zur Berechtigungsprüfung beim Aufbau und/oder Weitervermittlung (34) einer Teilnehmerverbindung (19) Anspruch 1, **dadurch gekennzeichnet, dass** die Berechnung der Prüfsumme (30) mit einem Hash- und/oder Checksummenalgorithmus erfolgt.

3. Verfahren zur Berechtigungsprüfung beim Aufbau und/oder Weitervermittlung (34) einer Teilnehmerverbindung nach einem der Ansprüche 1 oder 2, **dadurch gekennzeichnet, dass** die Überprüfung des Berechtigungscodes von einer Dienstleistungsapplikation (22, 24, 26) vorgenommen wird, wobei nur solche Rufe zu den Dienstleistungen weitergeleitet werden, die einen gültigen Berechtigungscode aufweisen.

4. Verfahren zur Berechtigungsprüfung beim Aufbau und/oder Weitervermittlung (34) einer Teilnehmerverbindung nach einem der Ansprüche 1 bis 3, **dadurch gekennzeichnet, dass** der Berechtigungscode die Weitervermittlung (34) der Teilnehmerverbindung (19) durch das Mobilfunk- (10) oder Festnetz zu Dienstleistungsapplikationen (22, 24, 26) zulässt.

5. Verfahren zur Berechtigungsprüfung beim Aufbau und/oder Weitervermittlung (34) einer Teilnehmerkennung (19) nach einem der Ansprüche 1 bis 4, **dadurch gekennzeichnet, dass** der Berechtigungscode die Weitervermittlung (34) der Teilnehmerverbindung (19) durch das Mobilfunk- (10) oder Festnetz nur zu bestimmten Dienstleistungsapplikationen (22, 24, 26) zulässt.

6. Verfahren zur Berechtigungsprüfung beim Aufbau und/oder Weitervermittlung (34) einer Teilnehmerkennung (19) nach einem der Ansprüche 1 bis 5, **dadurch gekennzeichnet, dass** eine Dienstleistungsapplikation (22, 24, 26) bei Vorliegen eines gültigen Berechtigungscodes ein bestimmtes vorgebbares Ereignis auslöst.

7. Verfahren zur Berechtigungsprüfung beim Aufbau und/oder Weitervermittlung (34) einer Teilnehmerkennung (19) nach Anspruch 6, **dadurch gekennzeichnet, dass** das Ereignis im Versenden einer Textnachricht an eine bestimmte Rufnummer besteht.

8. Verfahren zur Berechtigungsprüfung beim Aufbau und/oder Weitervermittlung (34) einer Teilnehmerkennung (19) nach einem der Ansprüche 6 oder 7, **dadurch gekennzeichnet, dass** das Ereignis in der Vermittlung des Rufs an eine bestimmte Rufnummer besteht.

## Claims

1. A method for checking the authorization at setup and/or transfer (34) of a subscriber connection (19), which can be requested by a subscriber (A) by means of a communication device (14) in a mobile radio network (10) or a telephone landline network, wherein a destination call number (18), to which the call will be transferred, is entered into the communication device (14) and an identifying authorization code which is formed by a check sum (30) will be added to the destination call number (18), wherein a setup or a transfer will only be carried out by the mobile radio network (10) or the landline network for such subscriber connections which comprise a corresponding valid identifying authorization code, **characterized in that** the check sum (30) is formed by parts of the call number (MSISDN) or the complete call number (MSISDN) of the subscriber (A) and is generated by the mobile terminal of the subscriber (A).

2. A method for checking the authorization at setup and/or transfer (34) of a subscriber connection (19) according to claim 1, **characterized in that** the check sum (30) will be calculated by means of a hash and/or check sum algorithm.

3. A method for checking the authorization at setup and/or transfer (34) of a subscriber connection (19) according to one of the claims 1 or 2, **characterized in that** the verification of the authorization code will be carried out by a service application (22, 24, 26), wherein only such calls which comprise a valid authorization code will be transferred to the services.

4. A method for checking the authorization at setup and/or transfer (34) of a subscriber connection according to one of the claims 1 through 3, **characterized in that** the authorization code allows the transfer (34) of the subscriber connection (19) to service applications (22, 24, 26) by the mobile radio network (10) or the landline network.

5. A method for checking the authorization at setup and/or transfer (34) of a subscriber connection (19) according to one of the claims 1 through 4, **characterized in that** the authorization code allows the transfer (34) of the subscriber connection (19) by the mobile radio network (10) or the landline network to specific service applications (22, 24, 26) only.

6. A method for checking the authorization at setup and/or transfer (34) of a subscriber connection (19) according to one of the claims 1 through 5, **characterized in that** if a valid authorization code is present, a service application will trigger a specific pre-definable result.

7. A method for checking the authorization at setup and/or transfer (34) of a subscriber connection (19) according to claim 6, **characterized in that** the result consists of sending a text message to a specific call number.

8. A method for checking the authorization at setup and/or transfer (34) of a subscriber connection (19) according to one of the claims 6 or 7, **characterized in that** the result consists of transferring the call to a specific call number.

## Revendications

1. Procédé de vérification d'autorisation lors de l'établissement et/ou du transfert (34) d'une liaison d'abonné (19), qui peut être demandé par un abonné (A) à l'aide d'un dispositif de communication (14) dans un réseau radio mobile (10) ou dans un réseau fixe, un numéro de destination (18), auquel est transféré l'appel, étant saisi dans le dispositif de communication (14) et un code d'autorisation identifiant, qui est formé par une somme de contrôle (30), étant joint au numéro de destination (18), le réseau radio mobile (10) ou le réseau fixe n'établissant ou ne transférant que de telles liaisons d'abonné qui comprennent un code d'autorisation correspondant, identifiant et valable, **caractérisé en ce que** la somme de contrôle (30) est formée par des parties du numéro d'appel (MSISDN) ou par le numéro d'appel complet (MSISDN) de l'abonné (A) et est générée par le terminal mobile de l'abonné (A).

2. Procédé de vérification d'autorisation lors de l'établissement et/ou du transfert (34) d'une liaison d'abonné (19) selon la revendication 1, **caractérisé en ce que** la somme de contrôle (30) est calculée à l'aide d'un algorithme de somme de hachage et/ou de contrôle.

3. Procédé de vérification d'autorisation lors de l'établissement et/ou du transfert (34) d'une liaison d'abonné (19) selon l'une des revendications 1 ou 2, **caractérisé en ce que** le code d'autorisation est vérifié par une application de service (22, 24, 26), seuls ces appels qui comprennent un code d'autorisation valable étant transférés aux services.

4. Procédé de vérification d'autorisation lors de l'établissement et/ou du transfert (34) d'une liaison d'abonné selon l'une des revendications 1 à 3, **caractérisé en ce que** le code d'autorisation permet le transfert (34) de la liaison d'abonné (19) par le réseau radio mobile (10) ou le réseau fixe à des applications de service (22, 24, 26).

5. Procédé de vérification d'autorisation lors de l'établissement et/ou du transfert (34) d'une liaison d'abonné (19) selon l'une des revendications 1 à 4, **caractérisé en ce que** le code d'autorisation ne permet le transfert (34) de la liaison d'abonné (19) par le réseau radio mobile (10) ou le réseau fixe qu'à des applications de service particulières.

6. Procédé de vérification d'autorisation lors de l'établissement et/ou du transfert (34) d'une liaison d'abonné (19) selon l'une des revendications 1 à 5, **caractérisé en ce que** dans le cas où il existe un code d'autorisation valable, l'application de service (22, 24, 26) déclenchera un certain résultat pré-définissable.

7. Procédé de vérification d'autorisation lors de l'établissement et/ou du transfert (34) d'une liaison d'abonné (19) selon la revendication 6, **caractérisé en ce que** le résultat consiste en l'envoi d'un message de texte à un numéro d'appel spécifique.

8. Procédé de vérification d'autorisation lors de l'établissement et/ou du transfert (34) d'une liaison d'abonné (19) selon l'une des revendications 6 ou 7, **caractérisé en ce que** le résultat consiste en un transfert de l'appel à un numéro d'appel spécifique.
